# FASCICULE DE BREVET EUROPEEN

(11) **EP 1 640 206 B1**
(45) Date de publication et mention de la délivrance du brevet: **09.07.2008**
(21) Numéro de dépôt: 05300738.1
(22) Date de dépôt: 09.09.2005
(51) Int. Cl.: B60N 2/68

(54) **Système de réglage d'un siège de véhicule automobile**
Verstellvorrichtung eines Kraftfahrzeugsitzes
Adjusting device for a vehicle seat

(30) Priorité: 22.09.2004 FR 0410018
(43) Date de publication de la demande: 29.03.2006
(73) Titulaire: RENAULT S.A.S., 92100 Boulogne Billancourt (FR)
(72) Inventeur: Makala, Jérôme, 78280, Guyancourt (FR); Blumenfeld, Chanthao, 78990, Élancourt (FR); Michel, Jacky, 93130, Noisy Le Sec (FR); Fournier, Matthieu, 92160, Antony (FR)

(56) Documents cités:
- EP-A- 1 247 724
- DE-A1- 10 062 217
- FR-A- 2 716 649
- FR-A- 2 808 175
- FR-A- 2 838 887

## Description

La présente invention concerne un système de réglage d'un siège de véhicule automobile, et plus particulièrement un siège comprenant un organe de liaison supérieure pour relier le dossier du siège à un élément supérieur de structure du véhicule.

Les sièges avant de véhicules automobiles sont généralement prévus avec possibilité de réglage de la position du siège relativement à la structure du véhicule et de réglage de l'inclinaison d'un dossier relativement à une assise. Pour ce faire, le dossier est relié à l'assise par une liaison articulée selon un axe transversal, et l'assise est montée sur le plancher du véhicule par l'intermédiaire de glissières.

Néanmoins, un tel siège, qui doit résister en cas de choc violent du véhicule automobile avec un obstacle, présente une armature et des articulations prévues en conséquence qui sont encombrantes et lourdes. On obtient un siège encombrant sans toutefois obtenir une rigidité satisfaisante du siège.

Un tel siège est conçu avec une armature légère et mince, tout en améliorant la rigidité et la résistance du siège et permet d'améliorer la protection des occupants en cas de choc longitudinal ou latéral subi par un véhicule, ou en cas de retournement du véhicule.

Un tel siège réglable pour véhicule automobile permet un réglage simple du siège pouvant être automatisé avec un nombre limité d'actionneurs, et permet de préserver un espace d'un habitacle du véhicule.

La présente invention a pour objet un système de réglage d'un tel siège réglable de véhicule automobile d'armature légère et mince ayant une bonne rigidité et une bonne résistance. Le siège comprend un organe de liaison supérieure pour relier le dossier du siège à un élément supérieur de structure du véhicule.

Le document EP-A-1247724 décrit un système de réglage de siège selon le préambule de la revendication 1 ainsi qu'un siège de véhicule selon le préambule de la revendication 8.

Ainsi, il est proposé un système de réglage d'un siège de véhicule automobile. Le siège comprend un organe de liaison inférieure pour relier l'assise du siège à un élément inférieur de structure de véhicule, et un organe de liaison supérieure pour relier le dossier du siège à un élément supérieur de structure du véhicule. Le système comprend une unité de commande électronique, et :
- un actionneur linéaire inférieur apte à permettre la translation d'un élément coulissant inférieur du siège par rapport à l'élément inférieur de structure selon un axe longitudinal ;
- un actionneur linéaire supérieur apte à permettre la translation d'un élément coulissant supérieur du siège par rapport à l'élément supérieur de structure selon un axe longitudinal ;
- des capteurs de mesure des vitesses respectives de translation des éléments coulissants inférieur et supérieur ; et
- un moyen de commande des actionneurs linéaires pour régler la position du siège en fonction desdites mesures des vitesses respectives et d'une demande d'un utilisateur.

On peut alors commander le réglage du siège quelque soit la position du passager du siège.

Avantageusement, le moyen de commande est adapté pour synchroniser les vitesses de déplacement en translation longitudinale des éléments coulissants inférieur et supérieur du siège lors d'une commande de déplacement du siège selon un axe longitudinal.

Lors de l'avancement ou du recul du siège par un utilisateur, l'inclinaison de son dossier ne varie pas.

Dans un mode de réalisation préféré, le moyen de commande est adapté pour commander uniquement le déplacement en translation longitudinale de l'élément coulissant supérieur lors d'une commande d'inclinaison du dossier.

Dans un mode réalisation avantageux, les actionneurs linéaires de translation des éléments coulissants inférieur et supérieur comprennent chacun un moteur électrique et une vis sans fin.

En outre, ledit moyen de commande comprend une interface de commande permettant à l'utilisateur de demander un réglage de position du siège.

Par exemple, les éléments coulissants inférieur et supérieur coulissent dans une glissière respective comprenant des butées de fin de course.

En outre, les éléments coulissants inférieur et supérieur sont équipés respectivement d'un organe de blocage pouvant verrouiller ou non la position de l'élément coulissant respectif.

Le document FR-A-2808175 décrit un procédé de réglage de deux éléments d'un siège de véhicule par mesure des vitesses de déplacement.

Selon un autre aspect de l'invention, il est également proposé un procédé de réglage d'un siège de véhicule automobile. Le siège comprend un organe de liaison inférieure pour relier l'assise du siège à un élément inférieur de structure de véhicule, et un organe de liaison supérieure pour relier le dossier du siège à un élément supérieur de structure du véhicule. On mesure la vitesse de translation d'un élément coulissant inférieur du siège par rapport à l'élément inférieur de structure selon un axe longitudinal, et on mesure la vitesse de translation d'un élément coulissant supérieur du siège par rapport à l'élément supérieur de structure selon un axe longitudinal. On commande des actionneurs linéaires inférieur et supérieur pour régler la position du siège en fonction desdites mesures des vitesses respectives et d'une demande d'un utilisateur.

La présente invention et ses avantages seront mieux compris à l'étude de la description détaillée de modes de réalisation pris à titre d'exemples nullement limitatifs, et illustrés par des figures sur lesquelles :
- la figure 1 représente une vue schématique en coupe longitudinale de l'habitacle d'un véhicule automobile muni d'un siège selon un aspect de l'invention ;
- la figure 2 représente une vue en coupe transversale partielle selon une coupe transversale de l'habitacle d'un véhicule automobile muni du siège, selon la figure 1 ;
- la figure 3 représente un schéma cinématique d'un mode de réalisation d'un tel siège ; et
- la figure 4 illustre un procédé selon l'invention.

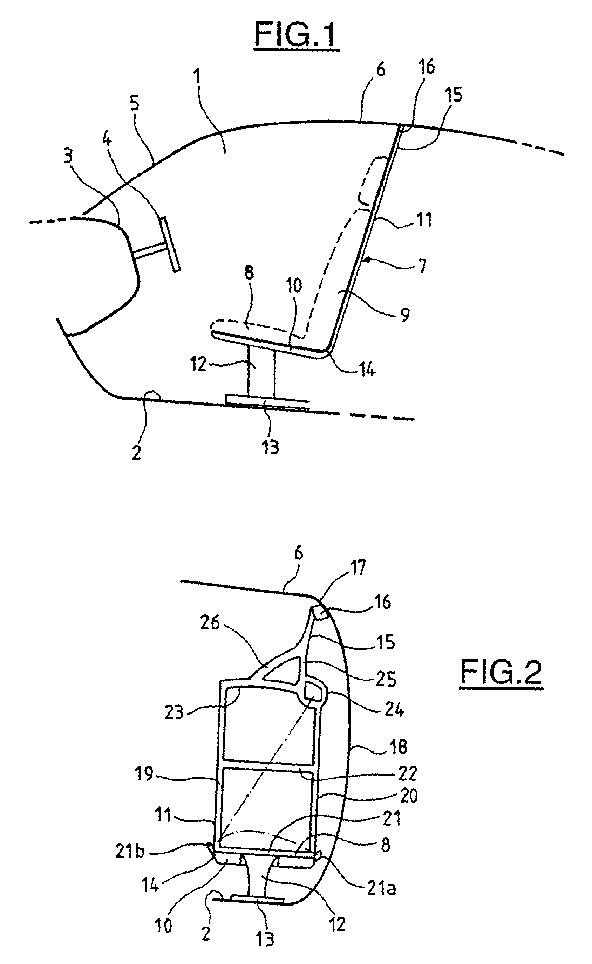

Sur la figure 1, un habitacle 1 d'un véhicule automobile représenté partiellement est délimité par un plancher 2, un tableau de bord 3 muni d'un volant 4, un pare-brise avant 5 et un toit 6. Un siège avant de conducteur référencé 7 dans son ensemble est disposé face au volant 4.

Le siège 7 comprend une assise 8 et un dossier 9. Une armature du siège 7 est représentée en traits forts, un matelassage ou garniture du siège 7 étant délimité par des traits en pointillés.

L'armature du siège 7 comprend une portion d'assise 10 s'étendant sensiblement horizontalement en étant légèrement inclinée vers l'arrière et une portion de dossier ou portion d'appui 11 s'étendant sensiblement verticalement en étant sensiblement inclinée vers l'arrière. La portion d'assise 10 de l'armature est reliée au plancher 2 par l'intermédiaire d'une liaison d'assise sous la forme d'un plot central ou pied 12 et d'un organe de liaison inférieure 13, le pied 12 présentant une extrémité supérieure fixée à la portion d'assise 10 et une extrémité inférieure fixée à l'organe de liaison inférieure 13. La portion d'appui 11 et la portion d'assise 10 sont reliées par une portion de liaison courbe 14 formant une liaison inférieure de dossier rigide entre la portion d'assise 10 et la portion d'appui 11. La portion d'appui 11 est munie à son extrémité supérieure d'un bras de fixation 15 s'étendant vers le haut à partir du bord supérieur de la portion d'appui 11, l'extrémité du bras 15 opposé à la portion d'appui 11 étant reliée à un élément supérieur de structure du véhicule automobile par un organe de liaison supérieure 16.

Comme on peut mieux le voir sur la figure 2, l'organe de liaison supérieure 16 est disposé entre le bras 15 et un longeron supérieure 17 du véhicule, c'est-à-dire un élément longitudinal de structure du véhicule délimitant un bord supérieur du toit 6. L'habitacle 1 est limité latéralement par un montant 18 situé sensiblement à côté du dossier 9 du siège 7. Un tel montant 18, nommé « pied-milieu », est généralement disposé entre une ouverture de porte arrière et une ouverture de porte avant formées dans la structure du véhicule. Un tel montant contribue à la rigidité de la structure du véhicule automobile, malgré les ouvertures nécessaires pour l'accès aux places avant et arrière.

Comme cela apparaît mieux sur la figure 2 où le siège 7 a été représenté sans matelassage, la portion d'appui 11 comprend deux montants latéraux 19, 20, une traverse inférieure 21, une traverse intermédiaire 22, et une traverse supérieure 23. Une portion de logement 24 est formée à l'intersection du montant 20 situé du côté du pied-milieu 18 et de la traverse supérieure 23 de l'armature de la portion d'appui 11. La portion de logement 24 se présente sous la forme d'un cadre de profil sensiblement carré permettant le logement et la fixation d'un enrouleur de ceinture de sécurité non représenté, pour former un point d'attache haut d'une ceinture de sécurité embarquée sur le siège 7, qui est également muni de moyens d'attache inférieure sous la forme d'une première patte de fixation 21 a prévue à l'extrémité latérale de la traverse inférieure 21, du côté du pied-milieu 18, et une seconde patte de fixation 21b prévue à l'extrémité opposée de la traverse inférieure 21 de la portion d'appui 11. La première patte 21 a est prévue pour une fixation permanente d'une extrémité d'une ceinture de sécurité, l'autre patte 21b étant prévue pour la fixation d'un dispositif de fixation amovible d'un portion intermédiaire de la ceinture de sécurité. Une ceinture de sécurité s'étendant entre les différents points d'attache est schématisée en traits mixtes C.

L'armature comprend une branche sensiblement verticale 26 reliant le bras 15 au cadre 24 et une branche oblique 26 reliant le bras 15 sensiblement au milieu de la traverse supérieure 23 de la portion d'appui 11.

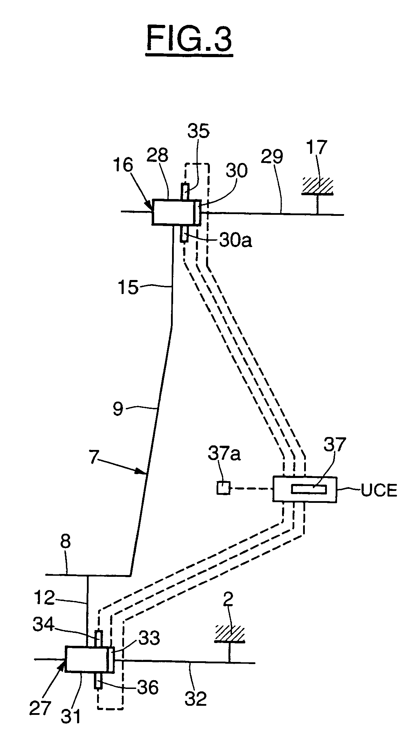

Sur la figure 3, où les références aux éléments semblables à ceux des figures 1 et 2 ont été reprises, les liaisons supérieure et inférieure du siège 7 sont adaptées pour un réglage de la position longitudinale du siège 7 relativement à la structure du véhicule, et pour un réglage de l'inclinaison du dossier.

L'organe de liaison supérieure 16 est prévu sous la forme d'un élément coulissant supérieur ou premier chariot supérieur 28 solidaire du bras 15 et apte à coulisser sur un rail longitudinal supérieur 29 solidaire de l'élément supérieur de structure 17 représenté de façon schématique par un point fixe. Le premier chariot 28 peut être déplacé longitudinalement en avant ou en arrière relativement à l'élément supérieur de structure 17. Un organe de blocage supérieur 30 solidaire du premier chariot 28 verrouille la position du premier chariot 28 sur le rail supérieur 29. L'organe de blocage supérieur 30 peut être déverrouillé. Un actionneur linéaire de translation 30a associé au premier chariot 28 est apte à provoquer un déplacement du premier chariot 28 le long du rail supérieur 29 lorsque l'organe de blocage supérieur 30 est déverrouillé. L'actionneur 30a peut être par exemple du type moteur électrique associé à une vis sans fin.

Un organe de liaison d'assise 13 est prévu sous la forme d'un élément coulissant inférieur ou second chariot inférieur 31 solidaire du pied 12 et apte à coulisser sur un rail longitudinal inférieur 32 solidaire du plancher 2, représenté de façon schématique par un point fixe. Le chariot inférieur 31 peut être déplacé longitudinalement en avant ou en arrière relativement au rail inférieur 32. Un second organe de blocage inférieur 33 solidaire du second chariot 31, verrouille la position du second chariot 31 sur le rail inférieur 32. L'organe de blocage inférieur 33 peut être déverrouillé. Un actionneur linéaire de translation 34 associé au second chariot 31 est apte à provoquer un déplacement du second chariot 31 le long du rail inférieur 32 lorsque l'organe de blocage inférieur 33 est déverrouillé. L'actionneur 34 peut être par exemple du type moteur électrique associé à une vis sans fin.

Un capteur de mesure de vitesse 35 mesure la vitesse de translation du chariot supérieur 28, et un capteur de mesure de vitesse 36 mesure la vitesse de translation du chariot inférieur 31 sont reliés à une unité de commande électronique UCE comprenant un module de commande 37 des actionneurs linéaires supérieur 30a et inférieur 34.

Le siège 7 comprend une interface de commande, par exemple constituée d'un boîtier 37a comprenant des boutons de commande, relié à l'unité de commande UCE, qui est par ailleurs reliée à l'organe de blocage supérieur 30, à l'organe de blocage inférieur 33, à l'actionneur 30a et à l'actionneur 34, ainsi qu'aux capteurs 35 et 36. L'unité de commande UCE comprend des moyens mémoire pour le stockage d'un programme d'ordinateur comprenant le module de commande 37 pour la commande d'actionneurs et d'organes de blocage associés à des organes de liaison du siège 7 et un microprocesseur pour la mise en oeuvre d'un tel programme.

Pour un réglage de la position longitudinale du siège 7 commandé à partir du boîtier de commande 37a, l'unité de commande UCE provoque le déverrouillage des organes de blocage supérieur 30 et inférieur 33, puis commande les actionneurs 34 et 35 pour un déplacement longitudinal des premier et second chariot 28, 31, qui entraîneront le siège 7 dans son ensemble. Une fois la position désirée atteinte, les organes de blocage 30, 33 sont verrouillés pour assurer le maintien du siège 7 en position.

Bien entendu, les organes de blocage 30, 33 en position verrouillée sont dimensionnés pour retenir le siège 7 en cas de choc subi par le véhicule automobile. On prévoira de préférence que les organes de blocage 30, 33 sont en position verrouillée par défaut, en étant par exemple sollicités par des éléments élastiques du type ressort. Les organes de blocage 30, 33 seront dans ce cas équipés d'actionneur commandés à partir de l'unité de commande 36, et apte à exercer des efforts de déverrouillage à l'encontre des éléments élastiques.

Un déplacement simultané dans un même sens et à une même vitesse du chariot inférieure 31 et du chariot supérieur 28 entraîne un déplacement longitudinal du siège 7 dans son ensemble sans modifier une inclinaison du dossier 9 relativement à l'assise 8.

Un réglage de l'inclinaison du dossier 9 peut être réalisé en déplaçant le premier chariot 28 relativement au second chariot 31.

Par exemple, pour faire basculer le dossier 9 vers l'arrière, on pourra maintenir fixe le second chariot 31, et déplacer vers l'arrière le premier chariot 28. Dans ce cas, l'extrémité supérieure du dossier 9, c'est-à-dire le bras 15, est entraînée vers l'arrière par le chariot supérieur 28, et l'extrémité inférieure du dossier 9 est retenue par l'articulation inférieure de dossier 42. Le dossier 9 bascule donc vers l'arrière en pivotant autour de l'axe de l'articulation inférieure de dossier 42. La liaison pivot 41a de la liaison intermédiaire 38 permet au bras 15 et à la liaison pivot-glissant 41b de pivoter relativement au premier chariot 28, la liaison pivot-glissant 41b permettant au bras de 15 de se déplacer relativement à l'élément intermédiaire 40.

Si on maintient le premier chariot 28 fixe et que l'on provoque un déplacement vers l'avant du second chariot 31 , on obtient également un basculement vers l'arrière du dossier 9.

Lorsque le premier chariot 28 et le second chariot 31 sont maintenus fixes par les organes de blocage 30, 33, une inclinaison du dossier 9 ne peut être modifiée, car, compte tenu de la cinématique de mouvement des différentes liaisons du siège, une rotation du dossier 9 doit s'accompagner d'un déplacement relatif des premiers et second chariots 28, 31.

Le boîtier de commande 37a est prévu pour permettre à la fois une commande de la position longitudinale du siège 7 et une commande d'inclinaison du dossier 9. En fonction d'une position des boutons de commande, l'unité de commande UCE pourra déverrouiller les organes de blocage 30, 33 de l'organe de liaison inférieure 13 et de l'organe de liaison supérieure 16 selon que ces derniers doivent être déplacés ou non, et commander de façon synchronisée l'organe de liaison inférieure 13 et l'organe de liaison supérieure 16 pour obtenir la position longitudinale souhaitée et l'inclinaison du dossier 9 souhaitée.

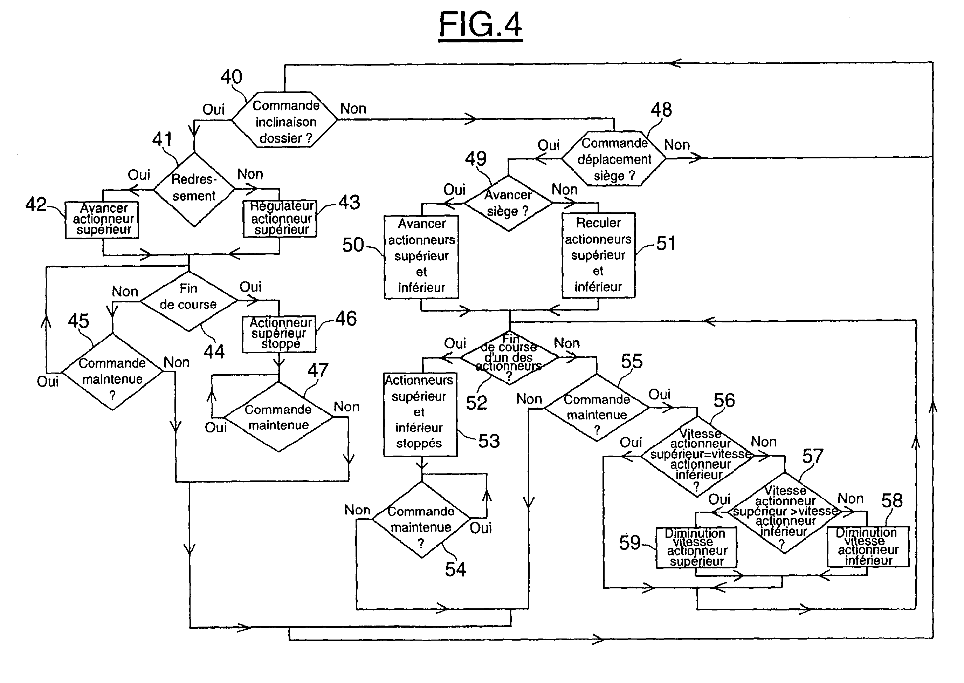

La figure 4 illustre un procédé de réglage d'un tel siège selon un aspect de l'invention.

Le module de commande 37 teste si une demande d'inclinaison du dossier 9 faite par l'utilisateur, par l'intermédiaire de l'interface de commande 37a, transmet une commande d'inclinaison du dossier 9 (étape 40).

Si ce n'est pas le cas, on passe à une étape 48 décrite ultérieurement, sinon, lorsque le module de commande 37 reçoit une commande d'inclinaison du dossier 9 du siège 7, il teste le sens d'inclinaison demandé (étape 41). Si le sens d'inclinaison demandé est de redresser ou incliner vers l'avant le dossier 9, alors le module de commande 37 commande l'actionneur linéaire supérieur 30a dans un déplacement selon son axe longitudinal, en direction de l'avant du véhicule (étape 42). Par contre, si le sens d'inclinaison demandé est d'incliner vers l'arrière le dossier 9, le module de commande 37 commande l'actionneur linéaire supérieur dans un déplacement selon son axe longitudinal, en direction de l'arrière du véhicule (étape 43).

Suite à l'étape 42 ou 43, le module de commande 37 teste si l'actionneur linéaire supérieur 30a est en fin de course ou non (étape 44), par exemple au moyen d'un capteur de position. Si l'actionneur linéaire supérieur 30a est en fin de course, sur la butée correspondante, le module de commande 37 teste si la commande est maintenue (étape 45), et si c'est le cas, le module de commande 37 continue à l'étape 44. Si ce n'est pas le cas, le module de commande 37 stoppe l'actionneur linéaire supérieur 30a (étape 46), et teste si la commande est maintenue (étape 47). Si la commande est maintenue, le module de commande 37 continue à l'étape 47, et sinon continue à l'étape 40.

Si lors du test de l'étape 40, le module de commande ne détecte pas de commande d'inclinaison du dossier 9 du siège 7, alors il teste si Le module de commande 37 teste si une demande de modification de la position du siège 9 relativement à la structure du véhicule est faite par l'utilisateur, par l'intermédiaire de l'interface de commande 37a, c'est-à-dire si une commande de modification de la position du siège 9 relativement à la structure du véhicule est transmise (étape 48). Si ce n'est pas le cas, le module de commande 37 continue à l'étape 40.

Par contre, si une telle commande est reçue par le module de commande 37, celui-ci teste s'il s'agit d'une commande pour avancer le siège (étape49). S'il s'agit d'une commande d'avancement du siège, le module commande l'actionneur linéaire supérieur 30a dans un déplacement selon son axe longitudinal, en direction de l'avant du véhicule, ainsi que l'actionneur linéaire inférieur 34 dans un déplacement selon son axe longitudinal, en direction de l'avant du véhicule (étape 50). Par contre, s'il s'agit d'une commande de recul du siège, le module commande l'actionneur linéaire supérieur 30a dans un déplacement selon son axe longitudinal, en direction de l'arrière du véhicule, ainsi que l'actionneur linéaire inférieur 34 dans un déplacement selon son axe longitudinal, en direction de l'arrière du véhicule (étape 51).

Une difficulté est de synchroniser le déplacement des actionneurs linéaires supérieur 30a et inférieur 34. Cette synchronisation est décrite dans les étapes suivantes.

Le module de commande 37 teste alors si l'un des actionneurs linéaires supérieur 30a ou inférieur 34 est en fin de course ou non (étape 52), par exemple au moyen de capteurs de position respectifs.

Si l'un des actionneurs linéaires supérieur 30a ou inférieur 34 est en fin de course, alors le module de commande 37 stoppe les deux actionneurs linéaires supérieur 30a et inférieur 34. Ensuite, le module de commande 37 teste si la commande est maintenue (étape 54), et si c'est le cas, le module de commande continue à l'étape 54. Si ce n'est pas le cas, le module de commande continue à l'étape 40.

Par contre si aucun des actionneurs supérieur 30a et inférieur 34 n'est en fin de course, le module de commande 37 teste si la commande est maintenue (étape 55), et si ce n'est pas le cas, le module de commande continue à l'étape 40. Par contre, si la commande est maintenue, le module de commande 37 teste si les vitesses des éléments coulissants inférieur 31 et supérieur 28 sont égales. Les vitesses des éléments coulissants inférieur 31 et supérieur 28 sont fournies respectivement par les capteurs 36 et 35. Si les vitesses sont égales, alors le module de commande 37 continue à l'étape 40, sinon il compare les vitesses respectives des éléments coulissants inférieur 31 et supérieur 28 (étape 57).

Lorsque la vitesse de l'élément coulissant inférieur 31 est supérieure à la vitesse de l'élément coulissant supérieur 28, le module de commande 37 pilote l' actionneur inférieur de manière à ralentir le déplacement de l'élément coulissant inférieur 31, par exemple en diminuant la vitesse de rotation du moteur de l'actionneur inférieur (étape 58). Par contre, lorsque la vitesse de l'élément coulissant supérieur 28 est supérieure à la vitesse de l'élément coulissant inférieur 31, le module de commande 37 pilote l'actionneur supérieur de manière à ralentir le déplacement de l'élément coulissant supérieur 28 (étape 59). Ensuite, le module de commande 37 continue à l'étape 40.

L'invention permet notamment de pouvoir commander une modification de la position d'un siège tel que défini précédemment relativement à la structure du véhicule, sans modifier l'assise de l'utilisateur, en synchronisant le déplacement des éléments coulissants inférieur et supérieur du siège.

## Revendications

1. Système de réglage d'un siège (7) de véhicule automobile, ledit siège (7) comprenant un organe de liaison inférieure (13) pour relier l'assise (8) du siège (7) à un élément inférieur (2) de structure de véhicule et un organe de liaison supérieure (16) pour relier le dossier (9) du siège (7) à un élément supérieur (17) de structure du véhicule, et ledit système comprenant une unité de commande électronique (UCE), **caractérisé en ce qu'**il comprend :
- un actionneur linéaire inférieur (34) apte à permettre la translation d'un élément coulissant inférieur (31) du siège (7) par rapport à l'élément inférieur (2) de structure selon un axe longitudinal ;
- un actionneur linéaire supérieur (30a) apte à permettre la translation d'un élément coulissant supérieur (28) du siège par rapport à l'élément supérieur (17) de structure selon un axe longitudinal ;
- des capteurs (35, 36) de mesure des vitesses respectives de translation des éléments coulissants inférieur (31) et supérieur (28) ; et
- un moyen de commande (37) des actionneurs linéaires (30a, 34) pour régler la position du siège (7) en fonction desdites mesures des vitesses respectives et d'une demande d'un utilisateur.

2. Système selon la revendication 1, **caractérisé en ce que** le moyen de commande (37) est adapté pour synchroniser les vitesses de déplacement en translation longitudinale des éléments coulissants inférieur (31) et supérieur (28) du siège (7) lors d'une commande de déplacement du siège selon un axe longitudinal.

3. Système selon la revendication 1 ou 2, **caractérisé en ce que** le moyen de commande (37) est adapté pour commander uniquement le déplacement en translation longitudinale de l'élément coulissant supérieur (28) lors d'une commande d'inclinaison du dossier.

4. Système selon l'une quelconque des revendications 1 à 3, **caractérisé en ce que** lesdits actionneurs linéaires (34, 30a) de translation des éléments coulissants inférieur (31) et supérieur (28) comprennent chacun un moteur électrique et une vis sans fin.

5. Système selon l'une quelconque des revendications 1 à 4, **caractérisé en ce que** ledit moyen de commande (37) comprend une interface de commande (37a) permettant à l'utilisateur de demander un réglage de position du siège (7).

6. Système selon l'une quelconque des revendications 1 à 5, **caractérisé en ce que** les éléments coulissants inférieur (31) et supérieur (28) coulissent dans une glissière respective comprenant des butées de fin de course.

7. Système selon l'une quelconque des revendications 1 à 6, **caractérisé en ce que** les éléments coulissants inférieur (31) et supérieur (28) sont équipés respectivement d'un organe de blocage (33, 30) pouvant verrouiller ou non la position de l'élément coulissant respectif (31, 28).

8. Procédé de réglage d'un siège (7) de véhicule automobile, ledit siège (7) comprenant un élément coulissant inférieur (31) pour relier l'assise (8) du siège (7) à un élément inférieur (2) de structure de véhicule et un élément coulissant supérieur (28) pour relier le dossier (9) du siège (7) à un élément supérieur (17) de structure du véhicule, **caractérisé en ce que** :
- on mesure la vitesse de translation d'un élément coulissant inférieur (31) du siège (7) par rapport à l'élément inférieur (2) de structure selon un axe longitudinal ;
- on mesure la vitesse de translation d'un élément coulissant supérieur (28) du siège (7) par rapport à l'élément supérieur (17) de structure selon un axe longitudinal ; et
- on commande des actionneurs linéaires inférieur et supérieur (34, 30a) pour régler la position du siège (7) en fonction desdites mesures des vitesses respectives et d'une demande d'un utilisateur.

## Claims

1. System for adjusting a seat (7) of a motor vehicle, the said seat (7) comprising a bottom connecting member (13) for connecting the squab (8) of the seat (7) to a bottom vehicle structure element (2) and a top connecting member (16) for connecting the back (9) of the seat (7) to a top vehicle structure element (17), and the said system comprising an electronic control unit (UCE), **characterized in that** it comprises:
- a bottom linear actuator (34) capable of allowing the translation of a bottom sliding element (31) of the seat (7) relative to the bottom structure element (2) along a longitudinal axis;
- a top linear actuator (30a) capable of allowing the translation of a top sliding element (28) of the seat relative to the top structure element (17) along a longitudinal axis;
- sensors (35, 36) for measuring the respective speeds of translation of the bottom sliding element (31) and top sliding element (28); and
- a means (37) for controlling the linear actuators (30a, 34) to adjust the position of the seat (7) according to the said respective speed measurements and a request from a user.

2. System according to Claim 1, **characterized in that** the control means (37) is suitable for synchronizing the speeds of movement in longitudinal translation of the bottom sliding element (31) and top sliding element (28) of the seat (7) during a command to move the seat along a longitudinal axis.

3. System according to Claim 1 or 2, **characterized in that** the control means (37) is suitable for controlling only the movement in longitudinal translation of the top sliding element (28) during a command to incline the back.

4. System according to any one of Claims 1 to 3, **characterized in that** the said linear actuators (34, 30a) of translation of the bottom sliding element (31) and top sliding element (28) each comprise an electric motor and a worm.

5. System according to any one of Claims 1 to 4, **characterized in that** the said control means (37) comprises a control interface (37a) allowing the user to request a positional adjustment of the seat (7).

6. System according to any one of Claims 1 to 5, **characterized in that** the bottom sliding element (31) and top sliding element (28) slide in a respective runner comprising end-of-travel stops.

7. System according to any one of Claims 1 to 6, **characterized in that** the bottom sliding element (31) and top sliding element (28) are fitted respectively with a locking member (33, 30) that is able to lock or not lock the position of the respective sliding element (31, 28).

8. Method for adjusting a seat (7) of a motor vehicle, the said seat (7) comprising a bottom sliding element (31) for connecting the squab (8) of the seat (7) to a bottom vehicle structure element (2) and a top sliding element (28) for connecting the back (9) of the seat (7) to a top vehicle structure element (17),
**characterized in that**:
- the speed of translation of a bottom sliding element (31) of the seat (7) is measured relative to the bottom structure element (2) along a longitudinal axis;
- the speed of translation of a top sliding element (28) of the seat (7) is measured relative to the top structure element (17) along a longitudinal axis; and
- the bottom and top linear actuators (34, 30a) are controlled to adjust the position of the seat (7) according to the said respective speed measurements and a request from a user.

## Patentansprüche

1. System zum Einstellen eines Kraftfahrzeugsitzes (7), wobei der Sitz (7) ein unteres Verbindungsorgan (13) zum Verbinden der Sitzfläche (8) des Sitzes (7) mit einem unteren Strukturelement (2) des Fahrzeugs und ein oberes Verbindungsorgan (16) zum Verbinden der Rückenlehne (9) des Sitzes (7) mit einem oberen Strukturelement (17) des Fahrzeugs enthält, wobei das System eine elektronische Steuereinheit (UCE) enthält, **dadurch gekennzeichnet, dass** es enthält:
- einen unteren Linearaktor (34), der die translatorische Bewegung eines unteren Gleitelements (31) des Sitzes (7) in Bezug auf das untere Strukturelement (2) längs einer longitudinalen Achse ermöglichen kann;
- einen oberen Linearaktor (30a), der die translatorische Bewegung eines oberen Gleitelements (28) des Sitzes in Bezug auf das obere Strukturelement (17) längs einer longitudinalen Achse ermöglichen kann;
- Sensoren (35, 36) zum Messen der jeweiligen Translationsgeschwindigkeiten des unteren gleitenden Elements (31) und des oberen gleitenden Elements (28); und
- ein Steuermittel (37) für die Linearaktoren (30a, 34), um die Position des Sitzes (7) als Funktion der Messwerte der jeweiligen Geschwindigkeiten und einer Benutzeranforderung zu steuern.

2. System nach Anspruch 1, **dadurch gekennzeichnet, dass** das Steuermittel (37) ausgelegt ist, um die Geschwindigkeiten der longitudinalen translatorischen Verlagerung des unteren Gleitelements (31) bzw. des oberen Gleitelements (28) des Sitzes (7) bei einem Befehl zum Verlagern des Sitzes längs einer longitudinalen Achse zu synchronisieren.

3. System nach Anspruch 1 oder 2, **dadurch gekennzeichnet, dass** das Steuermittel (37) ausgelegt ist, um bei einem Rückenlehnen-Neigungsbefehl nur die longitudinale translatorische Verlagerung des oberen Gleitelements (28) zu steuern.

4. System nach einem der Ansprüche 1 bis 3, **dadurch gekennzeichnet, dass** die Linearaktoren (34, 30a) für die Translation des unteren Gleitelements (31) und des oberen Gleitelements (28) jeweils einen Elektromotor mit Endlosschraube aufweisen.

5. System nach einem der Ansprüche 1 bis 4, **dadurch gekennzeichnet, dass** das Steuermittel (37) eine Steuerschnittstelle (37a) aufweist, die dem Benutzer ermöglicht, eine Steuerung der Position des Sitzes (7) anzufordern.

6. System nach einem der Ansprüche 1 bis 5, **dadurch gekennzeichnet, dass** das untere Gleitelement (31) und das obere Gleitelement (28) in einer Gleitschiene gleiten, die jeweils Bahnende-Anschläge aufweist.

7. System nach einem der Ansprüche 1 bis 6, **dadurch gekennzeichnet, dass** das untere Gleitelement (31) und das obere Gleitelement (28) jeweils mit einem Blockierorgan (33, 30) versehen sind, das die Position des jeweiligen Gleitelements (31, 28) verriegeln kann oder nicht verriegeln kann.

8. Verfahren zum Steuern eines Kraftfahrzeugsitzes (7), wobei der Sitz (7) ein unteres Gleitelement (31) zum Verbinden der Sitzfläche (8) des Sitzes (7) mit einem unteren Strukturelement (2) des Fahrzeugs und ein oberes Gleitelement (28) zum Verbinden der Rückenlehne (9) des Sitzes (7) mit einem oberen Strukturelement (17) des Fahrzeugs umfasst, **dadurch gekennzeichnet, dass**:
- die Translationsgeschwindigkeit eines unteren Gleitelements (31) des Sitzes (7) in Bezug auf das untere Strukturelement (2) längs einer longitudinalen Achse gemessen wird;
- die Translationsgeschwindigkeit eines oberen Gleitelements (28) des Sitzes (7) in Bezug auf das obere Strukturelement (17) längs einer longitudinalen Achse gemessen wird; und
- ein unterer und ein oberer Linearaktor (34, 30a) gesteuert werden, um die Position des Sitzes (7) als Funktion der Messwerte der jeweiligen Geschwindigkeiten und einer Benutzeranforderung zu steuern.
